# EUROPEAN PATENT APPLICATION

(11) **EP 4 528 662 A1**
(43) Date of publication of application: **26.03.2025**
(21) Application number: 23198914.6
(22) Date of filing: 21.09.2023
(51) Int. Cl.: G06V 10/25, G06V 10/74, G06V 10/82, G06V 20/13, G06V 20/10, G06V 20/17

(54) **METHODS, SYSTEMS, AND COMPUTER PROGRAM PRODUCTS FOR CLASSIFYING AND GEOREFERENCING KEY POINTS IN IMAGE DATA**

(71) Applicant: Helsing GmbH, 81671 Munich (DE)
(72) Inventor: HENDRICH, Florian, 81671 Munich (DE); GONZALEZ, Mathieu, 81671 Munich (DE); WENZEL, Patrick, 81671 Munich (DE); EBERHARD, Thomas, 81671 Munich (DE)
(74) Representative: Rummler, Felix

(57) **Abstract**

A computer-implemented method of providing a trained image key point classifier, the method comprising: determining a training dataset comprising a plurality of pairs of satellite images, wherein both images of a pair include image data of the same one or more locations; and training a machine learning algorithm on the training dataset to determine key points on the images, wherein the key points on each image of a pair of images correspond to the locations.

## Description

### Technical Field

The present disclosure relates to methods, systems, and computer program products for classifying and georeferencing key points in image data. The present disclosure is applicable in the field of guidance, navigation, and control, in particular for navigation systems.

### Background

A frequent problem in the field of navigation is the determination of satellite image data that comprises a geolocalization of a point of interest. Known solutions include the use of large satellite image datasets that require a high amount of processing and memory resources.

There is a need for systems and methods that overcome these shortcomings.

### Summary

Disclosed and claimed herein are systems, methods, and devices for classifying and georeferencing key points in image data.

A first aspect of the present disclosure relates to a computer-implemented method of providing a trained image key point classifier. The method comprises the steps of:
- determining a training dataset comprising a plurality of pairs of satellite images, wherein both images of a pair include image data of the same one or more locations; and
- training a machine learning algorithm on the training dataset to determine key points on the images, wherein the key points on each image of a pair of images correspond to the locations.

The locations may comprise landmarks of points on the surface of the earth. They may be defined by giving latitude and longitude coordinates, and preferably also an elevation coordinate. Thereby, satellite images may be processed to reliably determine key points of locations even if the satellite images differ. Moreover, the trained key point classifier may be applicable to match key points on test datasets including pairs of images, wherein one image of a pair is an aerial image taken by an aerial vehicle and the other image is a satellite image.

Preferably, the key points include any point of interest in the image data. A key point may be represented by a pixel, a line or any other geometric structure of pixels comprised in the image data. More preferably, a key point in the first image data includes any part or feature of the image data that is detectable by an image processing algorithm, in particular such that there is a corresponding key point in the second image data. A key point may be a unique point, e.g. may have a unique descriptor with respect to other points or pixels within the same image data. Said unique descriptor can be dependent or independent of pixel values. In particular, key points may for example be identified as features in the image data that show, e.g. subtle or significant, changes in one or more pixel values, such as a grayscale or a colour scale value compared to surrounding pixels. A key point may refer to an edge, a corner, or a similar discernible structure in the image data. That is, depending on the algorithm, even very smooth features may be detected. This may include structures that are not visible to the human eye.

The machine learning algorithm may be trained on the training dataset such that the determined key points on the pair of images correspond to each other, e.g. have the same descriptor. A descriptor may be referred to as information associated with the key point describing the key point, such as visual and/or non-visual features of the key point. Thereby, the descriptor may include a data structure that describes the corresponding key points on the image.

The images of a pair may be identical or different. Using identical images and applying different augmentations to the images of a pair allows training the algorithm to determine key points on images that differ systematically. For example, one image can be augmented so that it looks similar to an image captured by an aerial vehicle. The other image may be left unaugmented or it may be augmented in a different way. The algorithm is then trained to determine key points on this kind of pairs of images.

In an embodiment, the images of each pair are recorded by different satellites and/or at different times. Preferably, the images of each pair have been recorded at a temporal distance of at least three months. This allow processing images at different seasons of the same year or of different years. For example, the images may include images taken in summer and winter, respectively.

In an embodiment, the machine learning algorithm includes a, e.g. Siamese, neural network, and training includes
- supplying each of the images of a pair to an input of a respective part of the Siamese neural network, and/or
- training the Siamese neural network by unsupervised training.

Unsupervised training allows determining the classifier without any labelling of data, which simplifies the method considerably. The loss function may be the same as for the UnSuperpoint algorithm (see references below). The neural network is preferred to include a convolutional layer because convolutional neural networks are particularly advantageous for image processing.

In a further embodiment, the method further comprises applying a spatial and/or non-spatial augmentation to the images, preferably applying the same augmentation and/or different augmentations to both images of a pair of images. Applying different augmentations may result in an increased robustness of the key point descriptors. Non-spatially augmenting each of the images may include a colour augmentation and/or noise reduction or noise amplification. The spatial augmentations may serve to preprocess the images to increase the reliability of the trained classifier. The augmentation may further be adapted to make the images more similar to aerial images.

In another embodiment, the method further comprises spatially augmenting one or more of the images, wherein spatially augmenting includes one or more of a homography transform, rotation, cropping, and/or shearing. This allows rendering a synthetic view one or both of the images, in particular of a sub-area included in each of the images. The homography transform may include determining a homography matrix. The homography matrix allows reversing the transform by applying an inverse matrix to a transformed image. The homography matrix may be 2-dimensional, and in particular have a shape of 3x3. It is preferred to apply a set of spatial transforms only to one of the images to create a synthetic view that is similar to an aerial image. This allows training the classifier to correctly determine the key points on a test dataset comprising a view.

A second aspect of the present disclosure relates to a computer-implemented method. The method comprises the steps of:
- receiving first image data representing a first portion of the surface of the earth;
- determining georeferenced image data, in particular satellite image data; and
- georeferencing one or more key points in the first image data based on matching the one or more key points in the first image data to corresponding key points in the georeferenced image data;

Determining the georeferenced image data comprises:
- estimating a geographic location of the first portion;
- determining a first georeferenced image data subset representing a second portion of the surface of the earth comprising the estimated geographic location;
- determining at least one second georeferenced image data subset representing a third portion of the earth in proximity to the second portion; and
- determining the georeferenced data based on, in particular by combining, the first and second georeferenced data subsets.

This method allows determining the georeferenced image data such that the key points can be georeferenced without using an unduly large amount of georeferenced data. Since the size of the georeferenced data determines the processing workload of a computer executing the method, the method allows reducing the processing power requirements. The third portion may include a third portion of the surface of the earth.

In an embodiment, the third portion includes an area of a predetermined size and/or a predetermined position with respect to the estimated geographic location. By determining a fixed size of georeferenced data, the processing amount can be determined beforehand. This allows executing the method on systems, for example embedded systems, whose computer resources are tailored to the needs of the method.

In a further embodiment, the third portion is adjacent to and/or overlapping with the second portion. This allows determining, at first, a comparably small area including the estimated location, and then increasing the size of the area, comprising the second and third portions, that is shown by the georeferenced data. This step may be repeated, and the step of georeferencing one or more key points may be repeated for the additional third portion only. Having a contiguous area and increasing its size step by step has the advantage that the size of processed data is thereby kept low. In one embodiment, a plurality of third portions is determined that may each be adjacent to the second portion.

In a further embodiment, the third portion surrounds the second portion. This allows starting from a small area and increasing the size of the area into all spatial directions. This is advantageous if due to intrinsic properties of the matching algorithm, the direction into which to look for more key points cannot be determined beforehand.

In a further embodiment, the area is centred around the estimated location. This allows adding the third portion(s) symmetrically.

In a further embodiment, a dimension of the area is a predetermined multiple of a dimension of the second portion, wherein the multiple is preferably identical to or smaller than one. This allows limiting the needed processing power in cases where the estimated location is close to the true location. In these cases, the second portion may already comprise a large part of the first portion, and the non-overlapping part is smaller than the second portion. In this cases, it is only necessary to add a small third portion that includes the non-overlapping part.

Preferably, the second georeferenced image does not overlap the first georeferenced image. This avoids double processing of image data. In an alternative embodiment, the second and first georeferenced images do (partly) overlap, in particular to ensure complete coverage of an area of interest.

In another embodiment, the first image data is received from a, in particular static or movable, image sensor platform, preferably an aerial vehicle, more preferably an unmanned aerial vehicle. In this embodiment, the method further comprises the following steps:
- determining positional information of the image sensor platform indicative of a pose of the image sensor platform; and
- determining the georeferenced data, in particular estimating the geographic location of the first portion, based on the positional information.

This allows increasing the efficiency if the method is applied repeatedly in predetermined intervals. For example, if the platform moves so slowly that the first portion in the field of view of the image sensor after the interval overlaps with that of the previous interval, the positional information can help obtaining the non-overlapping part. Preferably, the location is determined based on the positional information, more preferably the location is identical to the positional information.

It is preferred to subsequently determine a corrected pose of the platform based on the georeferenced key points. The pose of the image sensor platform is preferably expressed as 6DoF (position, tilt angle). The pose may include a pose relative to the first portion of the surface of the earth. Determining the pose preferably includes receiving the pose from the sensor platform, looking up previous poses, and/or determining the pose based on image data, preferably previously determined image data.

The satellite image is preferably an image that is expected to include the area captured by the camera. This allows navigation without a GNSS.

In yet another embodiment, the second georeferenced image data subset is determined in response to determining that a confidence measure associated with one or more corresponding key points in the first georeferenced image data subset is below a predetermined threshold. The confidence measure being below a predetermined threshold may include a number of matched key points being lower than a predetermined threshold number. This allows further saving computational resources since the second georeferenced image data subset is only determined if necessary for an application, such as determining a new pose of the platform. Optionally, a second confidence value may be determined that is associated with one or more corresponding key points in the first and second georeferenced data subsets. In response to the second confidence value being lower than the predetermined threshold, one or more further georeferenced image data subsets may be determined.

In yet a further embodiment, the method comprises determining the georeferenced image data such that the georeferenced image data is indicative of, in particular represents, the second portion and the third portion and/or such that the second portion and the third portion are oriented at a same angle as the first portion towards a cardinal direction of a spatial reference system of the earth. This angle may be determined for georeferenced satellite images and test images when taken, e.g. using an UAV equipped with an inertial navigation system. The portion of the earth shown on the second georeferenced image differs then only by a translation on the earth's surface.

In yet another embodiment, the method further comprises determining a georeference of one or more further positions other than the key points in the first image data. This step may be done by interpolation of the positions.

A third aspect of the present disclosure relates to a computer-implemented method. The method is preferred to include any feature of the method of the second aspect. The method includes the step of matching key points in image data received from a movable and/or static sensor platform to corresponding key points in satellite image data. Matching key points includes predicting corresponding key points by an image key point classifier obtained or obtainable by the method of the first aspect. It is preferred that the image data received from the movable sensor platform include the first image data of the second aspect. It is more preferred to capture the image data by an image sensor on the movable sensor platform. It is preferred that the movable sensor platform includes an aerial vehicle, in particular an unmanned aerial vehicle. This allows using a detector trained on satellite data for predicting key points for navigation of the platform, e.g. a UAV. This avoids the need to use image data from an aerial vehicle for training. This is because the augmentations of the satellite images described above can be chosen so that one of them looks like a camera image.

A fourth aspect of the present disclosure relates to a system. The system comprises one or more processors and one or more storage devices, wherein the system is configured to perform the computer-implemented method of the first aspect, the second aspect, and/or the third aspect.

A fifth aspect of the present disclosure relates to a computer program product for loading into a memory of a computer. The computer program product comprises instructions, that, when executed by a processor of the computer, cause the computer to execute a computer-implemented method of the first aspect the second aspect, and/or the third aspect.

A sixth aspect of the present disclosure relates to a computer program product comprising a trained image key point classifier obtainable by the computer-implemented method the first aspect..

All properties and embodiments that apply to the first aspect also apply to the second aspect and/or the third aspect.

### Brief description of the drawings

The features, objects, and advantages of the present disclosure will become more apparent from the detailed description set forth below when taken in conjunction with the drawings in which like reference numerals refer to similar elements.
- Figure 1 shows a flow chart of a method 100 of providing a trained image key point classifier.
- Figure 2 shows a block diagram of a system 200 for providing a trained image key point classifier.
- Figure 3 shows a schematic diagram of a scenario 300.
- Figure 4 shows a schematic diagram of a training dataset 400 and corresponding locations 410.
- Figure 5 shows a flow chart of a computer-implemented method 500.
- Figure 6 shows a schematic diagram including image data and a region 600 of the surface of the earth.
- Figure 7 shows a schematic diagram including image data and the region 600 of the surface of the earth.
- Figure 8 shows a schematic diagram including image data and the region 600 of the surface of the earth.
- Figure 9 shows a schematic diagram including image data and the region 600 of the surface of the earth.

### Detailed description of the preferred embodiments

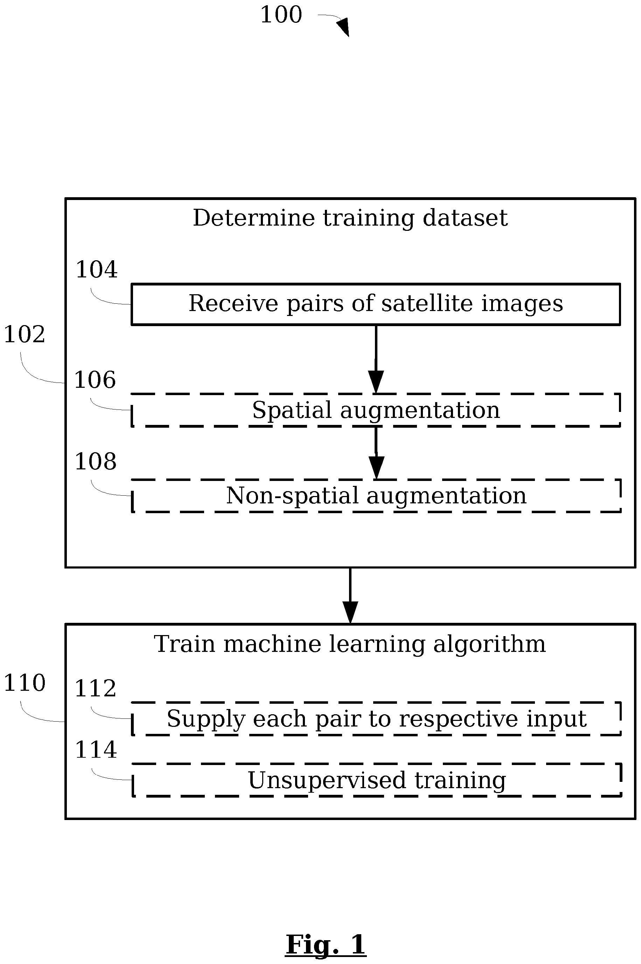

Figure 1 shows a flow chart of a method 100 of providing a trained image key point classifier.

A key point may include any part or feature of an image that is detectable by the machine learning algorithm such that a key point on the other image is detected that corresponds to the same location as described below.

100 Computer-implemented method of providing a trained image key point classifier. The method includes determining, 102 a training dataset. The training dataset comprises pairs of satellite images. This step comprises receiving, 104, a pair of satellite images. The satellite images of each pair are selected so that they show the same locations, i.e. that they include overlapping portions of the earth. In an embodiment, each pair shows two images of a category, such as a first image of the pair recorded in summer, and the other image of the pair recorded in winter. This allows training the algorithm to determine key points in presence of systematic differences, for example differences in vegetation. This allows increasing the variety in the training dataset, so that the neural network generalizes well. This allows applying the trained neural network to match key points on a camera image of a portion of the surface of the earth and a satellite image of the same portion that has been captured some months, years, or decades before.

In optional step 106, the images are spatially augmented, for example by random rotation, cropping, and/or shearing. It is preferred to determine a homography matrix during spatial augmentation. The homography matrix may have a shape of 3x3, and it allows transforming the spatially augmented image back to the original image. This backprojection can be implemented as a matrix multiplication, which is computationally efficient to conduct on suitable hardware.

In a preferred embodiment, the spatial augmentations are different for the images of a pair. It is further preferred to transform one of the satellite images so that it is more similar to an aerial image taken by an aerial vehicle, e. g. by an unmanned aerial vehicle (UAV). Thereby, a synthetic view of the same portion of the earth is created based on a real-world satellite image, which may be the same or a different image than the other image included in the pair of images. This allows training the classifier, on satellite imagery, to match, in inference, key points on pairs of images, each of which includes an image by a UAV and an image by a satellite. In other words, pre-processed satellite imagery can be used for training the classifier, so that there is no need to obtain images taken from an aerial vehicle. However, the trained neural network is able to classify key points on images that were actually captured by cameras mounted on an aerial vehicle.

At. 110, a machine learning algorithm is trained to determine key points on the images such that the key points on each image of a pair of images correspond to the same locations. A Siamese neural network may be used, and each of the images of a pair may be supplied to a respective input of the Siamese neural network.

The neural network is then preferably trained by self-supervised and/or unsupervised learning, 114, to detect corresponding key points.

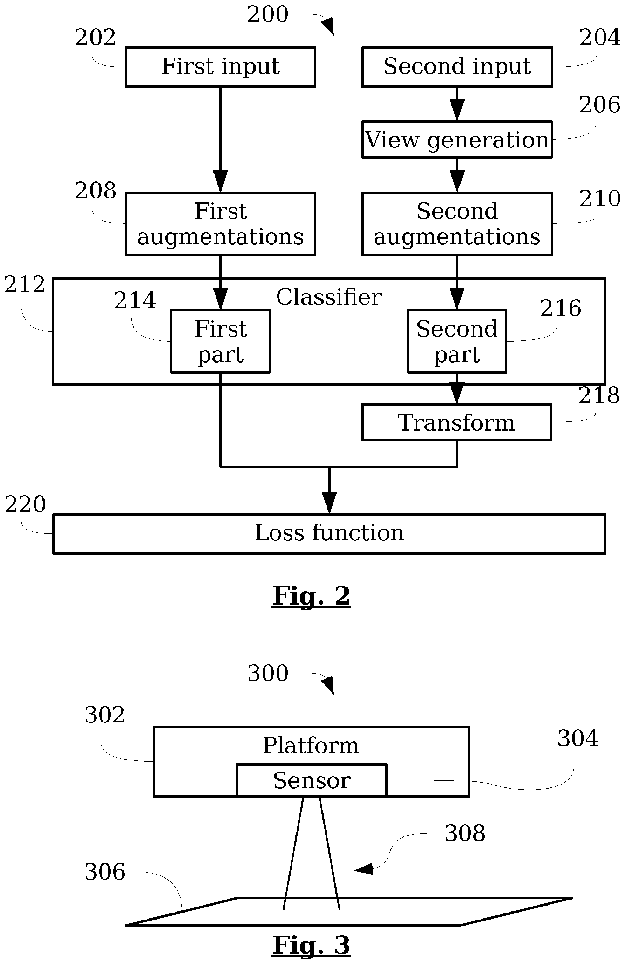

Figure 2 shows a block diagram of a system 200 for providing a trained image key point classifier. The system

200 includes an input unit 202 for a first image of a pair and a second input unit 204 for a second input of the pair. The second image is processed by a view generation unit 206 that applies one or more spatial augmentations that create the impression of an aerial image, e.g. shearing. It is preferred to generate a homography matrix that allows transforming the image back to the original image. For the first image, spatial and/or non-spatial augmentations may be performed by a first augmentation unit 208. For the second image, the same or different spatial and/or non-spatial augmentations may be performed by the second augmentation unit 210 in addition to the changes done by the view generation unit 206. The pairs of images may be supplied to an image classifier 210. The image classifier preferably includes a Siamese neural network, i.e. a neural network including a first part 212 and a second part 214 that share their weights. The output of each part the classifier includes one or more key points, for each of which there are determined the position (pixel row and column indices), a descriptor, and/or a score indicative of the reliability of the determination. The key points are determined to correspond, but the pixel positions on the images may be different because the second image has been transformed by the view generation unit 206. Therefore, an inverse transform unit 218 reverses this transform, preferably by applying an inverse matrix. The classifier is trained to determine the key points such that the positions determined by the first parts and the positions determined by the second part after transform by unit 218 are the same. The loss function 220 minimizes, among other loss criteria, Euclidean distances between the key points. An implementation is described in Christiansen et al.: UnsuperPoint: End-to-end Unsupervised Interest Point Detector and Descriptor. arXiv: 1907.04011.

Figure 3 shows a schematic diagram of a scenario 300. A movable sensor platform 302 comprises an image sensor 304, for example a digital camera. The movable sensor platform 302 may comprise an aerial vehicle, such as an unmanned aerial vehicle. The image sensor 302 is adapted to capture the first image 201, the second image 301, and further images 300 that depict a portion 306 of the surface of the earth. It is preferred to use a downward facing camera with field of view 308 as an image sensor 302 because this allows capturing the portion 306 surface of the earth from a perspective similar to that of a satellite.

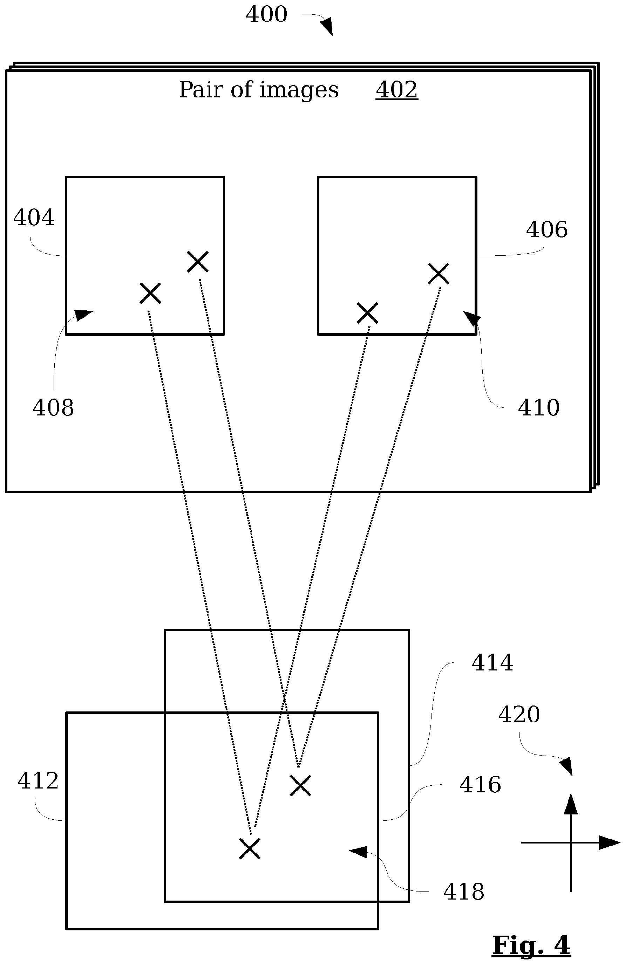

Figure 4 shows a schematic diagram of a training dataset 400 and corresponding locations 410. The training dataset 400 includes pairs 402 of images. The satellite images 404, 406 may be from different satellites and recorded at different seasons. The first portion 412 of the earth depicted by the first image 404 and the second portion 414 of the earth depicted by the second image 406. The overlap area 416 includes the locations 418 depicted by the key points 408, 410. Positioning on the earth may be done by a spatial reference system 420, which may include a geographic coordinate system such as geodetic coordinates. Such a specification can be provided by georeferencing.

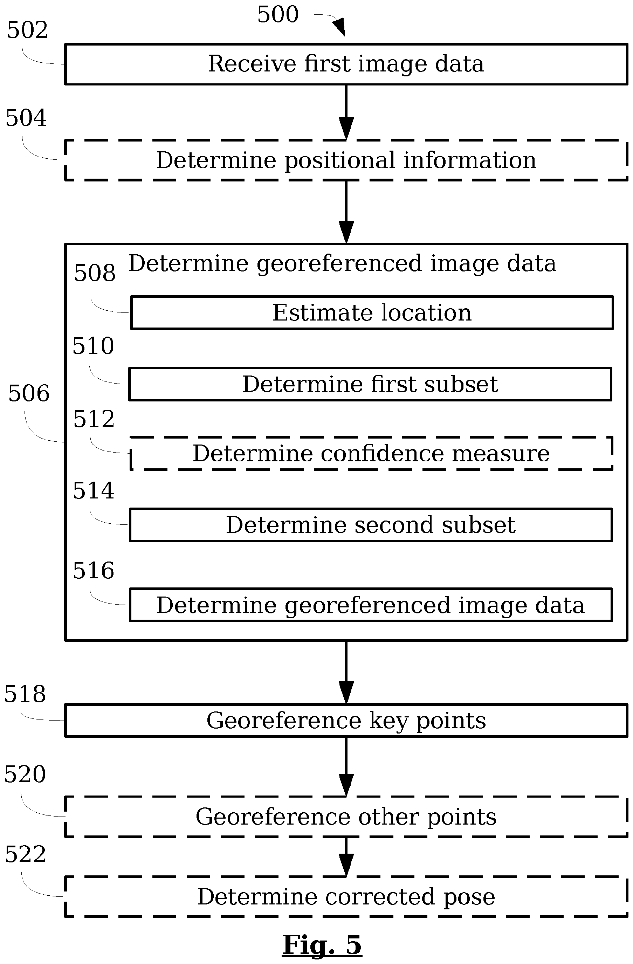

Figure 5 shows a flow chart of a computer-implemented method 500. The computer-implemented method 500 includes georeferencing key points in image data, which may be used for determining a pose of a movable image sensor platform. The method 500 may be executed by a system on a movable platform, in particular an aerial vehicle, such as an unmanned aerial vehicle (UAV).

The method 500 begins by receiving, 502, first image data. The first image data includes a first portion of the surface of the earth. The first image data may be determined by downward-facing camera of a platform, such as platform 302 in scenario 300. At optional step 504, positional information of the platform is determined. For example, a pose may be determined based on a previously determined earlier position and taking into account drift due to winds, or the result of operations of control surfaces. The positional information includes both the position of the platform as well as the orientation of the platform including the camera, and including the orientation of the camera with respect to the ground and to the platform itself. Any drifts may be calculated or estimated. However, the prior pose may be used as positional information without determining any drift.

At step 506, the georeferenced image data is determined. This step begins at step 508 by estimating a geographic location of the first portion. This may be done by determining the geographic location based on the positional information determined in step 504, or by receiving data from an inertial navigation system. The geographic location may include geographic coordinates, such as longitude and latitude, of, e.g. the centre of the image, i.e. of a rounded pixel position corresponding to half the image width in column index and half the image height in row index. However, the location may suffer from a lack of precision due to inaccuracies in the positional information.

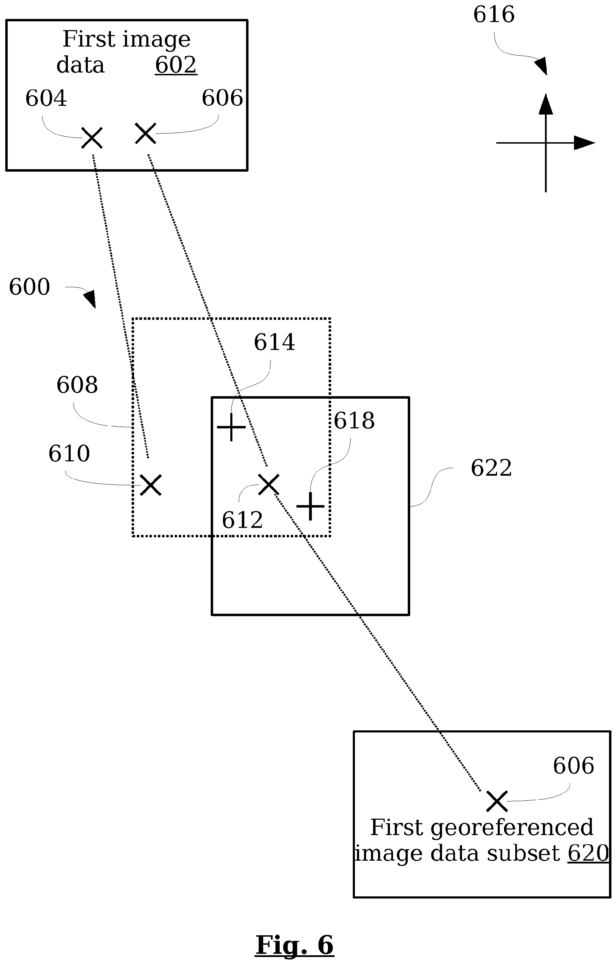

At step 510, a first georeferenced image data subset is determined. The first subset represents a second portion of the surface of the earth. The first subset is chosen so that it comprises the estimated geographic location. It is expected to have an overlap with the first portion. Therefore, it may be possible to match one or more key points to determine georeferences of the key points. However, the overlap need not be perfect, so that adding a third portion in proximity to the second portion may increase the overlap and allow matching more key points as explained with respect to Figures 6-9. There may even be no overlap at all. In this case, adding a sufficiently large third portion is necessary to be able to match any key points.

In optional step 512, a first attempt at matching key points in the first image data to corresponding key points in the first georeferenced image data is undertaken. A confidence measure is determined that is indicative of a confidence that a sufficient number of key points have been matched. For example, a number of matched key points may be determined. If the confidence measure is as high as or in excess of a predetermined threshold, the further step of determining a second subset may me omitted. If the confidence measure is below the threshold, a second georeferenced image data subset depicting a third portion of the surface of the earth is determined. The third portion is proximate to the second portion.

At step 514, a second georeferenced image data subset is determined. This second subset represents a third portion of the earth in proximity to the second portion. The second subset may be determined as described with reference to Figs. 6-9.

At step 516, the georeferenced image data is determined, preferably by combining the first georeferenced image data subset and the second georeferenced image data subset.

At step 518, key points in the first image data are georeferenced. To do so, the key points in the first image data are matched to corresponding key points in the georeferenced image data.

In optional step 520, one or more other points of the first image data may be georeferenced.

In optional step 522, a corrected pose of the platform is determined.

Figure 6 shows a schematic diagram including image data and a region 600 of the surface of the earth. The region 600 here is approximated as a plane identical to the drawing plane. Figures 6-9 illustrate the locations and portions determined during steps 508-516 of Fig. 5.

First image data 602 has preferably been captured by a sensor 304 of platform 302. First image data may be an RGB image, and it may be stored as a 2-dimensional matrix type data structure. First image data comprises two key points 604 and 606. First image data depicts a first portion 608 of the surface of the earth in region 600. The first key point 604 is located at geographical location 610, and the second key point 606 is located at geographic location 612. The true geographic location 614 of the first portion 608 could be defined as a coordinate according to a geographic coordinate system 616 (e.g. longitude, latitude) that corresponds to the centre of the first portion. However, due to a lack of accuracy in determining the geographic coordinates, only an estimated geographic location 618 is determined in step 508 and can be processed. It is typically shifted with respect to the true location by an amount that is less than a dimension (e.g. width or height) of the first portion 608. It is preferred to choose the size of the first portion 608 so that for a given accuracy of the estimation, the estimated location 618 is within the first portion 608, i.e. the distance between the true location 614 and estimated location 618 is smaller than the spatial extent of the first portion 608.

At step 510, a first georeferenced image data subset 620 is determined. The first subset 620 depicts the second portion 622 of the surface of the earth. In this embodiment, the first subset 620 has been chosen so that the size of the second portion 622 is equal to the size of the first portion 608, but alternatively, other dimensions can be chosen. It is preferred to use a first subset of a size at the same order of magnitude than the size of the first image data to avoid generating large georeferenced datasets, which are computationally costly to process. In the present example, second key point 606 is also on the first georeferenced image data subset 620 because its geographic location 618 is in the space on earth where first portion 608 and second portion 622 overlap. However, first key point 604 is not included in the first subset because its geographic location 610 is not included in second portion 622. Therefore, matching the key points would return only key point 606 and not key point 604.

It is to be understood that key points 604 and 606 serve as examples only. In examples, a plurality of key points are in the in the overlapping part of portions 622 and 608, and a plurality of key points are in the remainder of portion 608. However, to improve the reliability of the georeferencing, there is a need to increase the number of matched key points in excess of those that are in the overlapping part and can therefore by matched straightforwardly. However, at the same time, it is desired to include only small additional georeferenced image data subsets to avoid unduly high computational cost caused by processing large datasets.

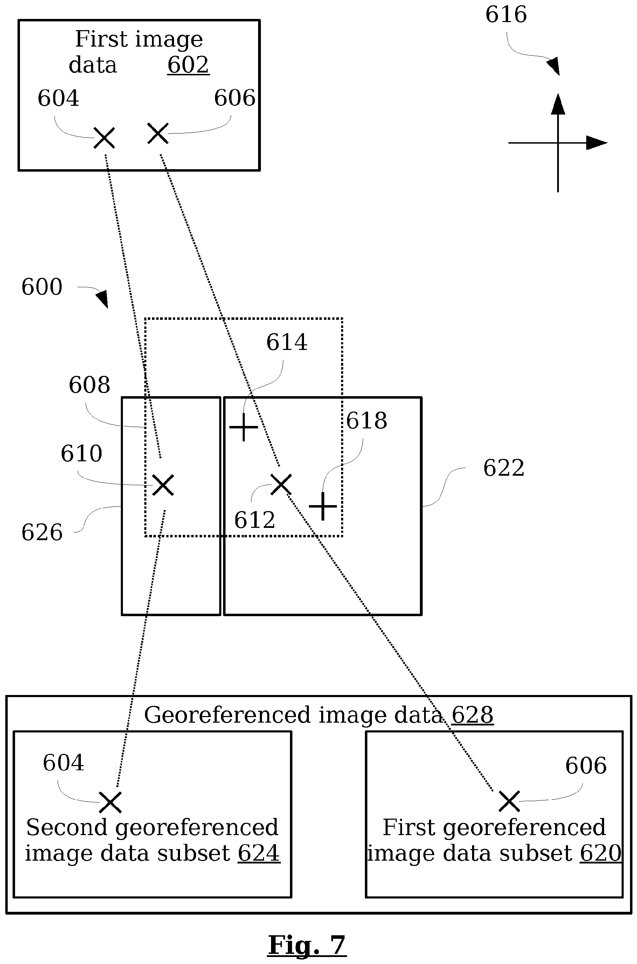

Figure 7 shows a schematic diagram including image data and the region 600 of the surface of the earth. Figure 7 depicts the features shown in Figure 6, and in addition a second georeferenced image data subset 624 as determined in step 514. Second georeferenced image data subset 624 depicts third portion 626 of the surface of the earth. The third portion 626 is proximate the second portion 622 and extends into one direction. One spatial dimension of the third portion 626 (height) is identical to that of portion 622, and the other spatial dimension is smaller than that of portion 622. The first and second portions are at a same angle towards a cardinal direction, e.g. North, of the geographic coordinate system 616. The angle can be determined by an inertial navigation system comprised in the platform 302.

In step 516, georeferenced image data 628 is determined as a combination of first subset 620 and second subset 624.

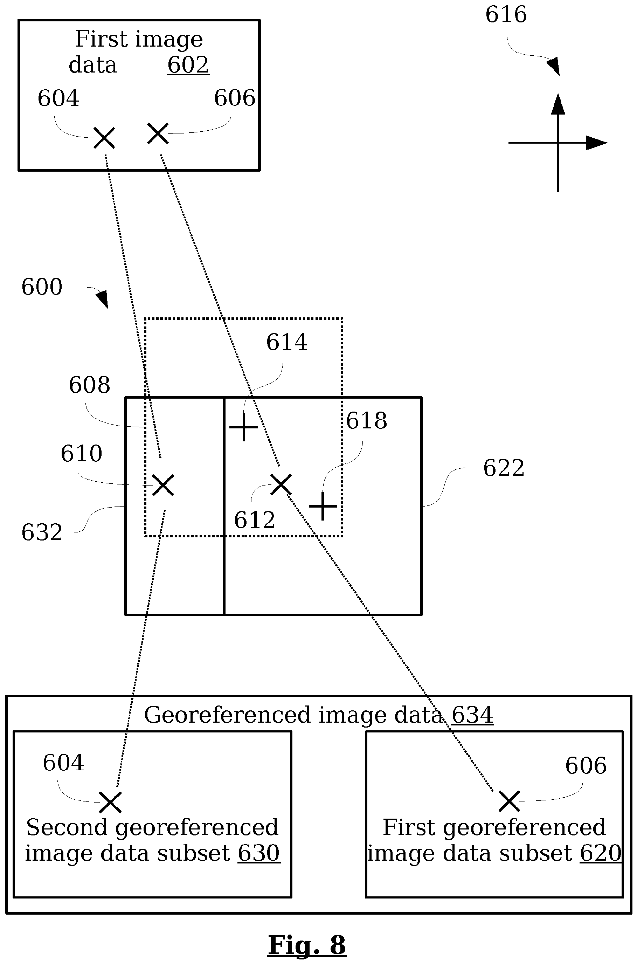

Figure 8 shows a schematic diagram including image data and the region 600 of the surface of the earth. Figure 8 is similar to Fig. 7, but the second portion 622 and the third portion 632 are adjacent, i.e. there is no space between them. This allows matching key points without missing any key point that is in a gap between the portions. Moreover, there is no overlap between the second portion 622 and the third portion 630. This has the advantage that no geographic location is subject to double processing.

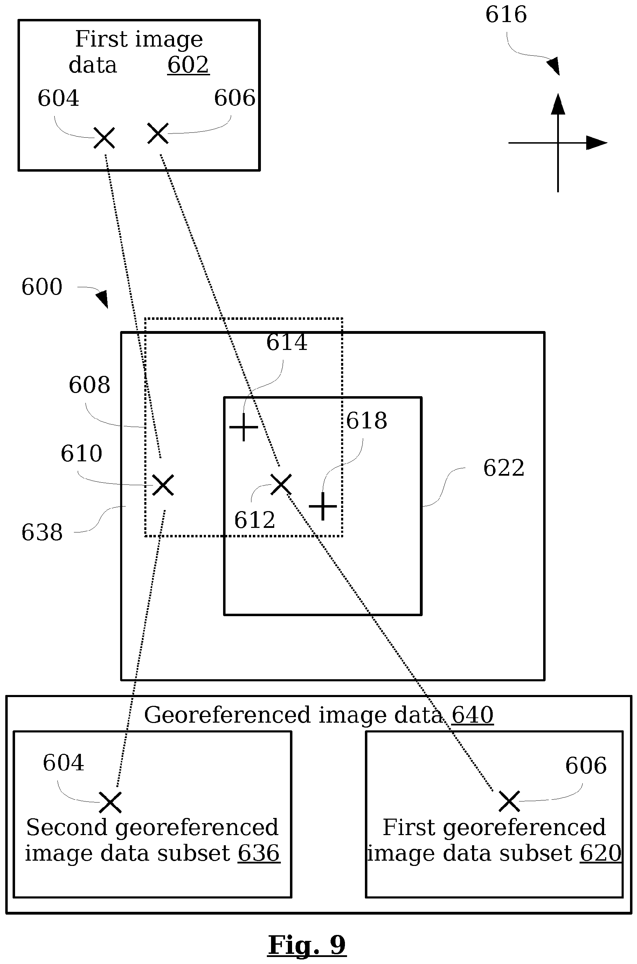

Figure 9 shows a schematic diagram including image data and the region 600 of the surface of the earth. Figure 9 is similar to Fig. 7 and 8, but the third portion 638 is surrounding the second portion 622 and centred around it. The third portion 638 captures now a larger area that cover most of the first portion, but the processing load is higher than for the third portions 626 and 632 of Figs. 7 and 8, respectively.

### Reference signs

- 100: Computer-implemented method of providing a trained image key point classifier
- 102-114: Steps of method 100
- 200: System
- 202: First image input unit
- 204: Second image input unit
- 206: View generation unit
- 208: First augmentation unit
- 210: Second augmentation unit
- 212: Classifier
- 214: First part
- 216: Second part
- 218: Transform
- 220: Loss function
- 300: Scenario
- 302: Platform
- 304: Image sensor
- 306: Portion of the surface of the earth
- 308: Field of view
- 400: Training dataset
- 402: Pairs of images
- 404, 406: Images
- 408: Key points on first image
- 410: Key points on second image
- 412: First portion of the earth depicted by first image
- 414: Second portion of the earth depicted by second image
- 416: Overlap area
- 418: Locations / locations of points on the earth
- 420: Spatial reference system
- 500: Computer-implemented method
- 502-522: Steps of method 500
- 600: Region of the surface of the earth
- 602: First image data
- 604: First key point in the first image data
- 606: Second key point in the first image data
- 608: First portion of the surface of the earth
- 610: Location of first key point
- 612: Location of second key point
- 614: True geographic location of the first portion
- 616: Geographic coordinate system
- 618: Estimated geographic location of the first portion
- 620: First georeferenced image data subset
- 622: Second portion of the surface of the earth
- 624: Second georeferenced image data subset
- 626: Third portion of the earth in proximity to the second portion
- 628: Georeferenced image data
- 630: Second georeferenced image data subset
- 632: Third portion of the earth in proximity to the second portion in a second example
- 634: Georeferenced image data in the second example
- 636: Second georeferenced image data subset
- 638: Third portion of the earth in proximity to the second portion in a third example
- 640: Georeferenced image data in the third example

## Claims

1. A computer-implemented method of providing a trained image key point classifier (212), the method comprising:
determining a training dataset (400) comprising a plurality of pairs (402) of satellite images (404, 406),
wherein both images (404, 406) of a pair (402) include image data of the same one or more locations (418); and
training a machine learning algorithm on the training dataset (400) to determine key points (408, 410) on the images (404, 406),
wherein the key points (408, 410) on each image of a pair of images correspond to the locations.

2. The method of claim 1, wherein the images of each pair are recorded by different satellites and/or at different times.

3. The method of any of the preceding claims, the method further comprising applying a spatial and/or non-spatial augmentation to the images (404, 406), preferably applying the same or different augmentation to both images of a pair of images.

4. The method of any of the preceding claims, the method further comprising spatially augmenting one or more of the images (404, 406), wherein spatially augmenting includes one or more of a homography transform, rotation, cropping, and/or shearing.

5. A computer-implemented method comprising:
receiving first image data (602) representing a first portion (608) of the surface of the earth;
determining georeferenced image data (628, 634, 640), in particular satellite image data; and
georeferencing one or more key points in the first image data (602) based on matching the one or more key points in the first image data (602) to corresponding key points in the georeferenced image data (628, 634, 640);
wherein determining the georeferenced image data (628, 634, 640) comprises:
estimating a geographic location of the first portion (608);
determining a first georeferenced image data subset (620) representing a second portion (622) of the surface of the earth comprising the estimated geographic location (618);
determining at least one second georeferenced image data subset representing a third portion (626, 632, 638) of the earth in proximity to the second portion (622); and
determining the georeferenced data based on, in particular by combining, the first and second georeferenced data subsets.

6. The method according to claim 5, wherein the third portion includes an area of a predetermined size and/or a predetermined position with respect to the estimated geographic location (618).

7. The method of claim 5 or 6,
wherein the third portion (626, 632, 638) is adjacent to, and/or overlapping with, the second portion (622);
wherein the third portion (626, 632, 638) surrounds the second portion (622);
wherein the area is centred around the estimated geographic location (618); and/or
wherein a dimension of the area is a predetermined multiple of a dimension of the second portion (622), wherein the multiple is preferably identical to or smaller than one.

8. The method of any of claims 5-7, wherein the first image data (602) is received from a, in particular static or movable, image sensor platform (302), preferably an aerial vehicle, more preferably an unmanned aerial vehicle, the method further comprising:
determining positional information of the image sensor platform (302) indicative of a pose of the image sensor platform (302); and
determining the georeferenced data, in particular estimating the geographic location of the first portion, based on the positional information.

9. The method of any of claims 5-8, wherein the second georeferenced image data subset is determined in response to determining that a confidence measure associated with one or more corresponding key points in the first georeferenced image data subset (620) is below a predetermined threshold.

10. The method of any of claims 5-9, comprising determining the georeferenced image data (628, 634, 640) such that the georeferenced image data is indicative of, in particular represents, the second portion and the third portion and/or such that the second portion (622) and the third portion (626, 630, 634) are oriented at a same angle as the first portion (608) towards a cardinal direction of a spatial reference system of the earth.

11. The method of any of claims 5-10,
further comprising determining a georeference of one or more further positions other than the key points in the first image data (602).

12. A computer-implemented method, in particular the method of any of claims 5-11, comprising:
matching key points in image data, in particular the first image data, received from, preferably captured by an image sensor on, a moveable and/or static sensor platform, preferably an aerial vehicle, more preferably a drone, to corresponding key points in satellite image data, wherein matching key points includes predicting corresponding key points by an image key point classifier (212) obtained or obtainable by the method of any of claims 1-4.

13. A system comprising one or more processors and one or more storage devices, wherein the system is configured to perform the computer-implemented method of any one of claims 1-12.

14. A computer program product for loading into a memory of a computer, comprising instructions, that, when executed by a processor of the computer, cause the computer to execute a computer-implemented method of any of claims 1-12.

15. A computer program product comprising a trained image key point classifier obtainable by the computer-implemented method of any of claims 1-4.

## Amended claims

### Amended claims in accordance with Rule 137(2) EPC.

1. A computer-implemented method comprising:
receiving first image data (602) representing a first portion (608) of the surface of the earth;
determining georeferenced image data (628, 634, 640), in particular satellite image data; and
georeferencing one or more key points in the first image data (602) based on matching the one or more key points in the first image data (602) to corresponding key points in the georeferenced image data (628, 634, 640);
wherein determining the georeferenced image data (628, 634, 640) comprises:
estimating a geographic location of the first portion (608);
determining a first georeferenced image data subset (620) representing a second portion (622) of the surface of the earth comprising the estimated geographic location (618);
determining at least one second georeferenced image data subset representing a third portion (626, 632, 638) of the earth in proximity to the second portion (622); and
determining the georeferenced data by combining the first and second georeferenced data subsets.

2. The method according to claim 1, wherein the third portion includes an area of a predetermined size and/or a predetermined position with respect to the estimated geographic location (618).

3. The method of any of the preceding claims,
wherein the third portion (626, 632, 638) is adjacent to, and/or overlapping with, the second portion (622);
wherein the third portion (626, 632, 638) surrounds the second portion (622);
wherein the area is centred around the estimated geographic location (618); and/or
wherein a dimension of the area is a predetermined multiple of a dimension of the second portion (622), wherein the multiple is preferably identical to or smaller than one.

4. The method of any of the preceding claims, wherein the first image data (602) is received from a, in particular static or movable, image sensor platform (302), preferably an aerial vehicle, more preferably an unmanned aerial vehicle, the method further comprising:
determining positional information of the image sensor platform (302) indicative of a pose of the image sensor platform (302); and
determining the georeferenced data, in particular estimating the geographic location of the first portion, based on the positional information.

5. The method of any of the preceding claims, wherein the second georeferenced image data subset is determined in response to determining that a confidence measure associated with one or more corresponding key points in the first georeferenced image data subset (620) is below a predetermined threshold.

6. The method of any of the preceding claims , comprising determining the georeferenced image data (628, 634, 640) such that the georeferenced image data is indicative of, in particular represents, the second portion and the third portion and/or such that the second portion (622) and the third portion (626, 630, 634) are oriented at a same angle as the first portion (608) towards a cardinal direction of a spatial reference system of the earth.

7. The method of any of the preceding claims,
further comprising determining a georeference of one or more further positions other than the key points in the first image data (602).

8. The method of any of the preceding claims, comprising:
matching key points in image data, in particular the first image data, received from,
preferably captured by an image sensor on, a moveable and/or static sensor platform,
preferably an aerial vehicle, more preferably a drone, to corresponding key points in satellite image data, wherein matching key points includes predicting corresponding key points by an image key point classifier (212) obtained or obtainable by a method of providing a trained image key point classifier (212), the method comprising:
determining a training dataset (400) comprising a plurality of pairs (402) of satellite images (404, 406),
wherein both images (404, 406) of a pair (402) include image data of the same one or more locations (418); and
training a machine learning algorithm on the training dataset (400) to determine key points (408, 410) on the images (404, 406),
wherein the key points (408, 410) on each image of a pair of images correspond to the locations.

9. The method of claim 8, wherein the images of each pair are recorded by different satellites and/or at different times.

10. The method of claim 8 or 9, the method further comprising applying a spatial and/or non-spatial augmentation to the images (404, 406), preferably applying the same or different augmentation to both images of a pair of images.

11. The method of any of claims 8-10, the method further comprising spatially augmenting one or more of the images (404, 406), wherein spatially augmenting includes one or more of a homography transform, rotation, cropping, and/or shearing.

12. A system comprising one or more processors and one or more storage devices, wherein the system is configured to perform the computer-implemented method of any one of claims 1-11.

13. A computer program product for loading into a memory of a computer, comprising instructions, that, when executed by a processor of the computer, cause the computer to execute a computer-implemented method of any of claims 1-11.
